(19) **Europäisches Patentamt / European Patent Office / Office européen des brevets**

(11) **EP 1 863 163 B1**

(12) **EUROPEAN PATENT SPECIFICATION**

(45) Date of publication and mention
of the grant of the patent:
**04.03.2009 Bulletin 2009/10**

(51) Int Cl.:
*H02P 6/00* *(2006.01)*     *H02P 21/00* *(2006.01)*

(21) Application number: **07010636.4**

(22) Date of filing: **29.05.2007**

(54) **Motor controller**

Motorsteuerung

Contrôleur de moteur

(84) Designated Contracting States:
**DE FR**

(30) Priority: **31.05.2006   JP 2006152537**

(43) Date of publication of application:
**05.12.2007   Bulletin 2007/49**

(73) Proprietor: **NSK Ltd.**
**Tokyo 141-8560 (JP)**

(72) Inventor: **Mori, Kenji**
**Maebashi-shi**
**Gunma 371-8527 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A1- 1 508 497          JP-A- 2002 029 432**
**JP-A- 2003 291 829**

**Description**

BACKGROUND OF THE INVENTION

1.Technical Field

The present invention relates to a motor controller for driving and controlling a multi-phase brushless motor having n phases (n is an integer of 3 or more).

2.Background Art

As a motor controller, for example, the following electric power steering device has been known. In the electric power steering device, current detecting units are provided in all phases of a motor driving circuit. Further, the electric power steering device is provided with a corrected value calculating unit for dividing the total sum of motor current values based on detecting signals detected in current detecting circuits of all the phases by the number of the phases of a motor to calculate a corrected value and a motor current value correcting unit for subtracting the corrected value from the motor current values to correct the motor current values so that the motor is driven based on current values actually supplied to each phase of the motor (for instance, see Patent Document 1).
Patent Document 1: JP-A-2005-59786 (page 1, Fig. 2)

However, in the example described in the Patent Document 1, an adjusting unit carries out a smoothing process, a phase compensating process or a gain adjusting process with respect to a current command value. Further, an adjusting unit carries out a smoothing process, a phase compensating process or a gain adjusting process after deviations between the current command value and current detected values. Thus, the influence of noise due to a quantization error arising in the adjusting unit cannot be removed. As the result, there is an unsolved problem that offensive noise is generated or a torque ripple is increased owing to the noise. Document JP 2002 029432 proposes a control scheme for reducing torque ripples due to current sensor offsets.

Accordingly, the present invention is devised by considering the above-described unsolved problem of the example. It is an obj ect of the present invention to provide a motor controller that can reduce the influence of noise or a torque ripple due to the noise. This object is solved by the features of claim 1. The dependent claims recite advantageous embodiments of the invention.

SUMMARY OF THE INVENTION

In order to achieve the object, according to a first aspect of the present invention, a motor controller drives and controls a brushless motor having n phases (n being an integer of 3 or more) in a motor driving circuit. The motor controller comprises: a motor current detecting unit that detects phase currents of the brushless motor respectively; a current command value calculating unit that respectively outputs current command values of the n phases of the brushless motor; n current deviation calculating units that calculate current deviations between the phase currents respectively detected in the current detecting unit and the phase current command values respectively outputted from the current command value calculating unit; a corrected value calculating unit; a current control unit; and a voltage command value calculating unit; wherein
that corrected value calculating unit is adapted to calculate an average value of the current deviations of the n phases outputted from the current deviation calculating units as a corrected value;
that current control unit is adapted to subtract the corrected value, calculated in the corrected value calculating unit, from the current deviation outputted from the n-1 current deviation calculating units of the n current deviation calculating units and then controlling the currents to output voltage command values of the n-1 phases, and
that voltage command value calculating unit is adapted to calculate a voltage command value of remaining one-phase from the voltage command values of the n-1 phases outputted from the current control unit,

- and wherein the voltage command values of the n phases calculated in the voltage command value calculating unit and the current control unit, respectively, are supplied to a motor driving unit.

In the invention according to the first aspect of the present invention, the corrected value calculating unit calculates the average value of the current deviations outputted from the current deviation calculating units as a corrected value. The corrected value is added to the current deviations of the n-1 phases outputted from the current deviation calculating units, and then the currents are controlled to output the voltage command values of the n-1 phases. The voltage command value of remaining one-phase is calculated from the voltage command values of the n-1 phases by the voltage command value calculating unit. The voltage command values of the n phases calculated in the voltage command value calculating unit are supplied to the motor driving unit. Accordingly, the influence of noise due to a quantization error arising when an adjusting process such as a smoothing process, a phase compensating process or a gain adjustment is carried out to each of the phases is dispersed. Consequently, an offensive flapping sound due to the influence of the noise can be suppressed and a torque ripple can be reduced.

According to a second aspect of the present invention as set forth in the first aspect of the present invention, it may be adapted that the current deviation calculating units have current deviation adjusting units that carry out an adjusting process with a quantization error to input the outputs of the current deviation adjusting units to the corrected value calculating unit.

According to a third aspect of the present invention as set forth in the second aspect of the present invention, it may be adapted that the adjusting process with the quantization error includes at least one of a smoothing process, a phase compensating process and a gain adjusting process of the n current deviations.

According to a fourth aspect of the present invention as set forth in the third aspect of the present invention, it may be adapted that the current deviation adjusting units carry out at least one of the smoothing process for suppressing an oscillation of the current deviation, the phase compensating process and the gain adjusting process.

According to a fifth aspect of the present invention as set forth in the first aspect of the present invention, it may be adapted that the current deviation calculating units have command value adjusting units that carry out at least one of a smoothing process, a phase compensating process and a gain adjusting process with respect to the current command values of the n phases outputted from the current command value calculating unit to calculate deviations between outputs of the command value adjusting units and the current detected values of the n phases detected in the current detecting unit.

According to a sixth aspect of the present invention as set forth in the first aspect of the present invention, the motor controller further comprises: a counter electromotive voltage calculating unit that calculates the counter electromotive voltage of each phase of the brushless motor; and a counter electromotive voltage adding unit that individually adds n phase voltages outputted from the current control unit and the voltage command value calculating unit to n phase counter electromotive voltages of the counter electromotive voltage calculating unit to output results to the motor driving circuit.

According to the present invention, the influence of noise due to a quantization error arising when at least one of adjusting processes of a smoothing process, a phase compensating process and a gain adjusting process is carried out to each phase is dispersed. Consequently, an offensive flapping sound due to the influence of the noise can be effectively suppressed and a torque ripple can be reduced.

BRIEF DESCRIPTION OF THE DRAWINGS

Fig. 1 is a block diagram showing one embodiment when the present invention is applied to an electric power steering device;
Fig. 2 is a characteristic diagram showing a steering assist command value calculating map used in a steering assist command value calculating part;
Fig. 3 is a block diagram showing a specific structure of a current feedback control part shown in Fig. 1;
Fig. 4 is a characteristic diagram showing relations between motor driving currents of respective phases and counter electromotive voltages of respective phases; and
Fig. 5 is a block diagram showing another embodiment of the present invention.

DESCRIPTION OF PREFERRED EMBODIMENTS

Now, an embodiment of the present invention will be described below by referring to the drawings.

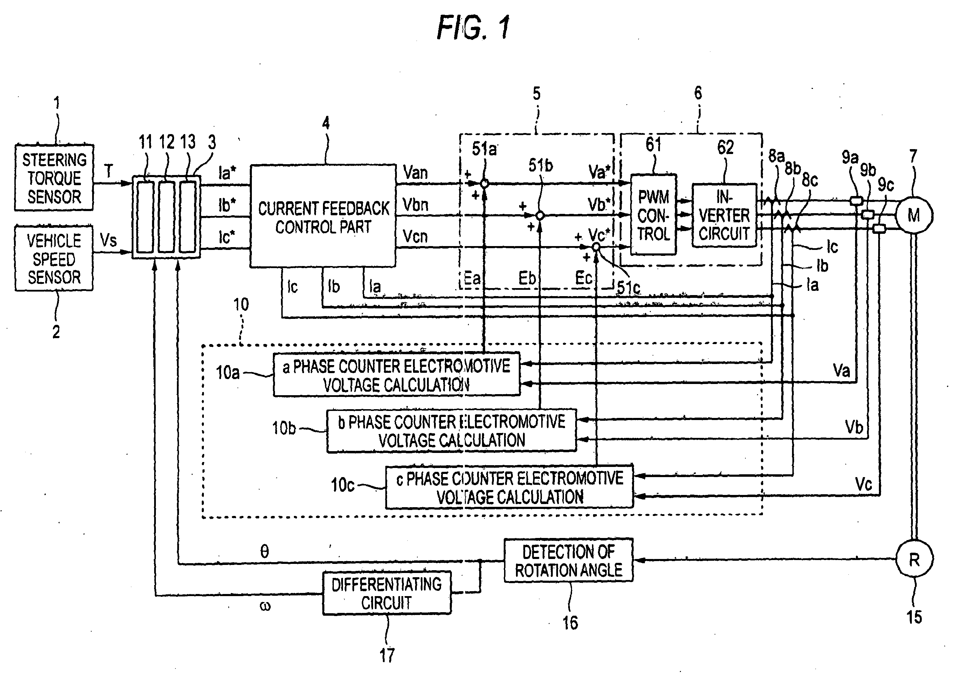

Fig. 1 is an entire block diagram showing one embodiment when the present invention is applied to an electric power steering device. In the drawing, reference numeral 1 designates a steering torque sensor for detecting a steering torque T transmitted to a steering wheel not shown in the drawing and 2 designates a vehicle speed sensor for detecting a vehicle speed Vs of a vehicle.
The steering torque T detected in the steering torque sensor 1 and the vehicle speed Vs detected in the vehicle speed sensor 2 are inputted to a current command value calculating part 3 as a current command value calculating unit. Current command values of three phases Ia* to Ic* outputted from the current command value calculating part 3 are inputted to a current feedback control part 4 to control currents so as to be fed back and output voltage command values Van to Vcn. The voltage command values Van to Vcn outputted from the current feedback control part 4 and below-described counter electromotive voltage estimated values Ea to Ec of respective phases are inputted to a counter electromotive voltage adding part 5 as a counter electromotive voltage adding unit. In the counter electromotive voltage adding part 5, both the values are added to calculate voltage command values Va* to Vc*. The voltage command values Va* to Vc* outputted from the counter electromotive voltage adding part 5 are supplied to a motor driving circuit 6 as a motor driving unit and motor driving currents Ia to Ic outputted from the motor driving circuit 6 are respectively supplied to the phases of a three phase brushless motor 7.

Then, the motor driving currents Ia to Ic outputted from the motor driving circuit 6 are respectively detected in motor current detecting parts 8a to 8c and terminal voltages Va to Vc of the phases of the three phase brushless motor 7 are respectively detected in terminal voltage detecting circuits 9a to 9c. The motor driving currents Ia to Ic detected in the motor current detecting parts 8a to 8c and the terminal voltages Va to Vc of the phases respectively detected in the terminal voltage detecting circuits 9a to 9c are inputted to an each phase counter electromotive voltage calculating part 10 as an each phase counter electromotive voltage calculating unit to calculate the counter electromotive voltage estimated values Ea to Ec of a phase a to a phase c. The calculated counter electromotive voltage estimated values Ea to Ec are inputted to the counter electromotive voltage adding part 5.

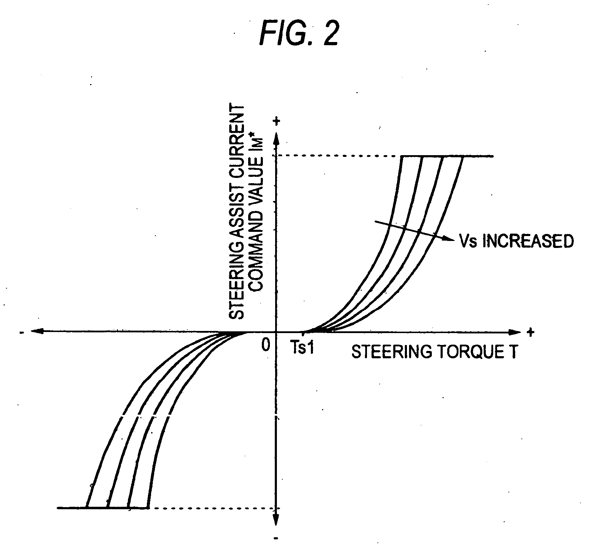

The current command value calculating part 3 includes a steering assist current command value calculating part 11 for calculating a steering assist current command value $I_M$* by referring to a current command value calculating map shown in Fig. 2 on the basis of the inputted steering torque T and the vehicle speed Vs, a vector control part 12 for controlling the vector of the steering assist current command value $I_M$* calculated in the steering assist current command value calculating part 11 to calculate current command values Id and Iq of d-q axes and a two phase/three phase converting part 13 for two phase/three phase converting the current command values Id and Iq outputted from the vector control part 12 to calculate three phase current command values Ia*, Ib* and Ic*.

Here, the steering assist current command value calculating map of the steering assist current command value calculating part 11 is formed by, as shown in Fig. 2, a characteristic diagram including an axis of abscissas taking the steering torque T and an axis of ordinates taking the steering assist current command value $I_M$* and represented by parabolic curves having vehicle speed detected values V as parameters. Then, the steering assist current command value $I_M$* maintains "0" while the steering torque T remains from "0" to a setting value Ts1 in the vicinity thereof. When the steering torque T exceeds the setting value Ts1, the steering assist current command value $I_M$* initially relatively gently increases relative to the increase of the steering torque T. However, when the steering torque T is more increased, the steering assist current command value $I_M$* is set so as to steeply increase relative to the increase of the steering torque T. A plurality of the characteristic curves is set so that an inclination is decreased as the vehicle speed is increased.

In the vector control part 12, a motor rotation angle θ outputted from a rotation angle detecting part 16 for calculating the motor rotation angle θ in accordance with a rotation angle detecting signal outputted from a resolver 15 as a motor rotating position detecting unit for detecting a motor rotating position integrally connected to the below-described three phase brushless motor and a motor angular velocity ω outputted from a differentiating circuit 17 for differentiating the motor rotation angle θ are inputted and a d-q axis calculating process is carried out on the basis of them to output a d-axis current Id and a q-axis current Iq and these currents are outputted to the two phase/three phase converting part 13.

Then, in the two phase/three phase converting part 13, the current Id and the current Iq are converted into the three phase current command values Ia*, Ib* and Ic* and inputted to the current feedback control part 4.

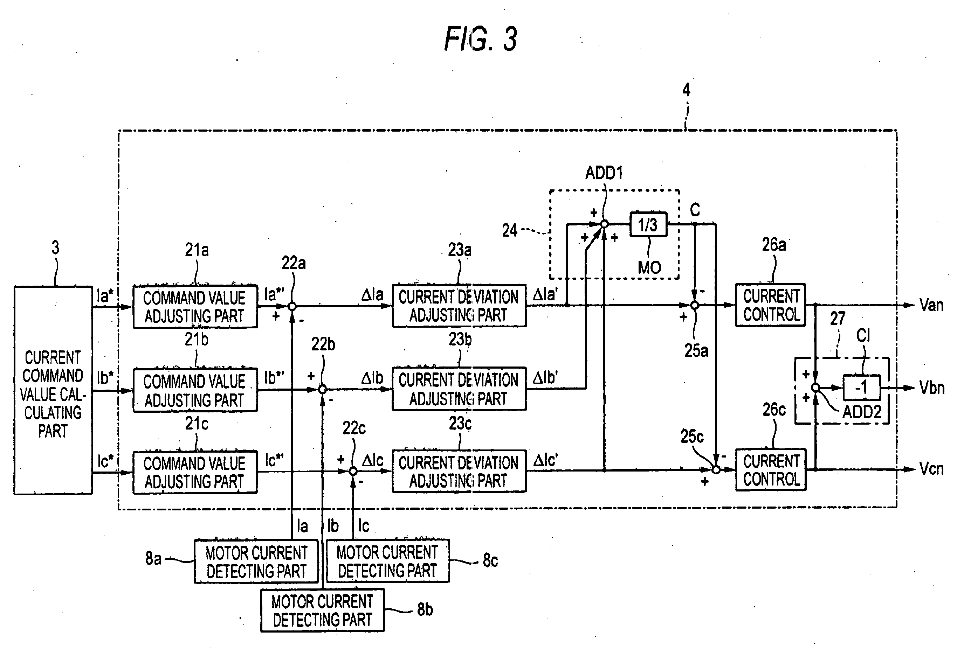

The current feedback control part 4 includes, as shown in Fig. 3, command value adjusting parts 21a, 21b and 21c to which the three phase current command values Ia*, Ib* and Ic* outputted from the two phase/three phase converting part 13 of the current command value calculating part 3 are individually inputted to carry out at least one of adjusting processes such as a smoothing filter process for removing noise relative to the current command values Ia*, Ib* and Ic*, a phase compensating process for compensating a stability and a responsiveness and a gain adjustment, current deviation calculating parts 22a, 22b, 22c as current deviation calculating units for calculating current deviations ΔIa, ΔIb and ΔIc of adjusted command values Ia*', Ib*' and Ic*' outputted from the command value adjusting parts 21a, 21b and 21c and the motor driving currents Ia, Ib and Ic detected in the motor current detecting parts 8a, 8b and 8c, current deviation adjusting parts 23a, 23b and 23c as current deviation adjusting units to which the current deviations ΔIa, ΔIb and ΔIc outputted from the current deviation calculating parts 22a, 22b and 22c are individually inputted to carry out at least one of a smoothing process for suppressing noise components included in the current deviations ΔIa, ΔIb and ΔIc, a phase compensating process and a gain adjustment, a corrected value calculating part 24 as a corrected value calculating unit to which adjusted current deviations ΔIa', ΔIb' and ΔIc' outputted from the current deviation adjusting parts 23a, 23b and 23c are inputted to calculate a corrected value C on the basis of them, subtracting parts 25a and 25c for subtracting the corrected value C outputted from the corrected value calculating part 24 from the adjusted current deviations ΔIa' and ΔIc' outputted from the current deviation adjusting parts 23a and 23c, current control parts 26a and 26c as current control units for carrying out, for instance, a proportional integrating control process (PI control process) relative to subtracted values outputted from the subtracting parts 25a and 25c to output voltage command values Van and Vcn and a voltage command value calculating part 27 for calculating a remaining voltage command value Vbn on the basis of the voltage command values Van and Vcn outputted from the voltage control parts 26a and 26c.

The corrected value calculating part 24 includes an adder ADD1 for adding the adjusted current deviations of

the three phases Δla' to Δlc' outputted from the current deviation adjusting parts 23a to 23c to calculate a total sum and an average value calculating part MO for dividing the total sum of the three phase current deviations Δla' to Δlc' outputted from the adder ADD 1 by the number of the phases of 3 to calculate a current deviation average value and output the current deviation average value to the subtracting parts 25a and 25c as the corrected value C.

Further, the voltage command value calculating part 27 includes an adder ADD2 for adding the voltage command values Van and Vcn outputted from the current control parts 26a and 26c and a symbol inverter C1 for inverting the symbol of an added value outputted from the adder ADD2. The symbol of the added value obtained by adding the voltage command value Van of the phase a and the voltage command value Vcn of the phase c is inverted, so that the voltage command value Vbn of remaining one-phase, that is, the phase b of the voltage command values of the three phases can be calculated.

Further, the motor driving circuit 6 includes a pulse width modulation control part 61 to which the voltage command values Va* to Vc* of the three phases outputted from the counter electromotive voltage adding part 5 are inputted to carry out a pulse width modulation on based on the voltage command values Va* to Vc* of the three phases and an inverter circuit 62 in which the gates of switching elements of six field effect transistors are controlled by pulse width modulation signals outputted from the pulse width modulation control part 61 to output the three phase motor currents Ia to Ic to the three phase brushless motor 7.

Further, the each phase counter electromotive voltage calculating part 10 includes a counter electromotive voltage calculating part 10a of the phase a, a counter electromotive voltage calculating part 10b of the phase b and a counter electromotive voltage calculating part 10c of the phase c to which the motor driving currents Ia to Ic detected in the current detecting parts 8a to 8c and the terminal voltages Va to Vc of the phases respectively detected in the terminal voltage detecting circuits 9a to 9c are individually inputted. The counter electromotive voltage estimated values Ea to Ec of the phase a to the phase c that are calculated by carrying out calculations of below-described Eqs. (1) to (3) in the counter electromotive voltage calculating parts 10a to 10c are individually inputted to adders 51a to 51c forming the counter electromotive voltage adding part 5.

$$Ea = Va - (Ra + s \cdot La) \cdot Ia \qquad (1)$$

$$Eb = Vb - (Rb + s \cdot Lb) \cdot Ib \qquad (2)$$

$$Ec = Vc - (Rc + s \cdot Lc) \cdot Ic \qquad (3)$$

In this case, Ra to Rc designate winding resistance of a motor, La to Lc designate inductance of the motor, and s designates a Laplacean and indicates herein a differentiating calculation (d/dt).

Next, an operation of the above-described embodiment will be described below.

When a driver steers the steering wheel not shown in the drawing to transmit the steering torque T to the steering wheel, the steering torque T is detected by the steering torque sensor 1 and the vehicle speed Vs at that time is detected by the vehicle speed sensor 2.

Then, the detected steering torque T and the vehicle speed Vs are inputted to the steering assist current command value calculating part 11 of the current command value calculating part 3. Thus, in the steering assist current command value calculating part 11, the steering assist current command value $I_M*$ is calculated with reference to the steering assist current command value calculating map shown in Fig. 2 on the basis of the steering torque T and the vehicle speed Vs. The steering assist current command value $I_M{}^*$ is supplied to the vector control part 12. Thus, in the vector control part 12, in accordance with the motor rotation angle θ inputted from the rotation angle detecting part 16 and the motor angular velocity ω inputted from the differentiating circuit 17, the d-axis current command value Id and the q-axis current command value Iq on a d-q coordinate are calculated and the d-axis current command value Id and the q-axis current command value Iq are converted into the three phase current command values Ia*, Ib* and Ic* in the two phase/three phase converting part 13 and outputted to the current feedback control part 4.

In the current feedback control part 4, the command value adjusting parts 21a, 21b and 21c carry out at least one of the adjusting processes of the smoothing process, the phase compensating process and the gain adjustment relative to the three phase current command values Ia*, Ib* and Ic* . Then, the current deviation calculating parts 22a, 22b, 22c calculate the current deviations Δla, Δlb and Δlc by subtracting from the adjusted command values Ia*', Ib*' and Ic*' the motor driving currents Ia, Ib and Ic detected in the motor current detecting parts 8a, 8b and 8c respectively.

Then, the current deviation adjusting parts 23a, 23b and 23c carry out at least one of the current deviation adjusting processes such as the smoothing filter process for suppressing oscillations included in the current deviations $\Delta Ia$, $\Delta Ib$ and $\Delta Ic$, the phase compensating process and the gain adjustment relative to the current deviations $\Delta Ia$, $\Delta Ib$ and $\Delta Ic$ to input the adjusted current deviations $\Delta Ia'$, $\Delta Ib'$ and $\Delta Ic'$ to the corrected value calculating part 24. The corrected value calculating part 24 adds the inputted and adjusted current deviations $\Delta Ia'$, $\Delta Ib'$ and $\Delta Ic'$ in the adder ADD 1 to calculate the total sum of the three phase adjusted current deviations (= $\Delta Ia'+ \Delta Ib' + \Delta Ic'$). Then, the average value calculating part MO divides the total sum of the three phase adjusted current deviations by "3" to calculate the current deviation average value.

The current deviation average value is supplied as the corrected value C to the subtracting parts 25a and 25c to which the adjusted current deviations $\Delta Ia'$ and $\Delta Ic'$ of (n-1) phases outputted from the current deviation adjusting parts 23a and 23c are individually inputted to subtract the corrected value C from the adjusted current deviations $\Delta Ia'$ and $\Delta Ic'$. The subtracted outputs are supplied to the current control parts 26a and 26c to carry out the proportional integrating control process and output the voltage command values Van and Vcn.

Further, the calculated voltage command values Van and Vcn are supplied to the voltage command value calculating part 27 to calculate the voltage command value Vbn of the phase b as the remaining one-phase. The calculated voltage command values Van, Vbn and Vcn of the phases are respectively supplied to the counter electromotive voltage adding part 5. In the counter electromotive voltage adding part 5, the counter electromotive voltage estimated values Ea, Eb and Ec calculated on the basis of the motor currents Ia to Ic and the motor terminal voltages Va to Vc are added to the voltage command values Van, Vbn and Vcn outputted from the current feedback control part 4 to calculate the voltage command values Va*, Vb* and Vc* of the three phases.

Then, the voltage command values Va*, Vb* and Vc* of the three phases are outputted to the pulse width modulation control part 61 of the motor driving circuit 6. Consequently, the pulse width modulation signals for controlling respectively the gates of the switching elements of the inverter circuit 62 are outputted such that the three phase motor driving currents Ia, Ib and Ic for driving the three phase brushless motor 7 so as to generate an optimum steering assist force corresponding to the steering torque T and the vehicle speed Vs are outputted to the three phase brushless motor 7. Therefore, the optimum steering assist force is generated in the three phase brushless motor 7. The steering assist force is transmitted to a steering shaft to which the steering wheel is connected through, for instance, a reduction gear or a pinion shaft of a steering gear, so that the steering wheel can be steered with a light steering torque.

In the current feedback control part 4, the corrected value calculating part 24 calculates the average value of the adjusted current deviations $\Delta Ia'$ to $\Delta Ic'$ outputted from the current deviation adjusting parts 23a to 23c as the corrected value C. The current deviation average value as the corrected value is subtracted from the adjusted current deviations $\Delta Ia'$ and $\Delta Ic'$ of the (n-1) phases, and then, the proportional integrating control is carried out relative to the subtracted outputs in the current control parts 26a and 26c. Accordingly, noise due to a quantization error arising in the adjusting parts 21a to 21c and 23a to 23c can be dispersed respectively to the phases to suppress the generation of a flapping sound due to the noise and reduce a torque ripple.

Namely, for the purpose of simplifying an explanation, a description will be given below by supposing a case that only the proportional control (gain P > 0) is carried out in the current control parts 26a and 26c.

Now, the inputs of the three phases of the current control parts 26a and 26c under an ideal state are designated by Ina', Inb' and Inc' and the outputted voltage command values of the three phases under an ideal state are designated by Va', Vb' and Vc'.

Under this state, the input and output relations between a phase A, a phase C and a phase B are expressed as described below.

$$\text{Phase A: } \text{Van}' = P \cdot \text{Ina}'$$

$$\text{Phase C: } \text{Vcn}' = P \cdot \text{Inc}'$$

$$\text{Phase B: } \text{Vbn}' = -\text{Van}' - \text{Vcn}' = -P(\text{Ina}' + \text{Inc}')$$

$$\text{and } \text{Ina}' + \text{Inb}' + \text{Inc}' = 0$$

When inputs have errors Wa, Wb and Wc, the inputs Ina, Inb and Inc can be expressed as described below.

$$\text{Phase A:} \quad \text{Ina} = \text{Ina'} + \text{Wa}$$

$$\text{Phase B:} \quad \text{Inb} = \text{Inb'} + \text{Wb}$$

$$\text{Phase C:} \quad \text{Inb} = \text{Inb'} + \text{Wc}$$

Therefore, the corrected value C calculated in the corrected value calculating part 24 is expressed by

$$C = (\text{Ina} + \text{Inb} + \text{Inc})/3$$
$$= (\text{Ina'} + \text{Inb'} + \text{Inc'} + \text{Wa} + \text{Wb} + \text{Wc})/3$$

With Ina' + Inb' + Inc' = 0 , C is expressed by

$$C = (\text{Wa} + \text{Wb} + \text{Wc})/3$$

Then, the voltage command values Van, Vbn and Vcn of the phases are respectively expressed as described below.

$$\text{Phase A:} \quad \text{Van} = P(\text{Ina}-C)$$
$$= P(\text{Ina'} + 2/3\text{Wa} - 1/3\text{Wb} - 1/3\text{Wc})$$

$$\text{Phase C:} \quad \text{Vcn} = P(\text{Inc}-C)$$
$$= P(\text{Inc'} - 1/3\text{Wa} - 1/3\text{Wb} + 2/3\text{Wc})$$

$$\text{Phase B:} \quad \text{Vbn} = -\text{Van} - \text{Vcn}$$
$$= -P(\text{Ina'} + \text{Inc'} + 1/3\text{Wa} - 2/3\text{Wb} + 1/3\text{Wc})$$

The absolute values of the errors from the ideal voltage command values Van', Vbn' and Vcn' of the respective phases are expressed as described below.

$$\text{Phase A:} \quad |\text{Van} - \text{Van'}| = |P(\text{Ina'} + 2/3\text{Wa} - 1/3\text{Wb} - 1/3\text{Wc})$$

$$- P \cdot \text{Ina'}| \leq 2/3P\,|\text{Wa}| + 1/3P|\text{Wb}| + 1/3P|\text{Wc}|$$

$$\text{Phase C:} \quad |Vcn - Vcn'| = |P(Ina' + 2/3Wa - 1/3Wb - 1/3Wc)$$

$$- P \cdot Ina'| \le |1/3P|Wa| + 1/3P|Wb| + 2/3P|Wc|$$

$$\text{Phase B:} \quad |Vbn - Vbn'| = |-P(Ina' + Inc' + 1/3Wa - 2/3Wb$$

$$+ 1/3Wc) + P(Ina' + Inc')| \le |1/3P|Wa| + 2/3P|Wb| + 1/3P|Wc|$$

For the purpose of simplicity, with |Wa| = |Wbl | = |Wc| the above-described absolute values of the errors are expressed as described below.

$$\text{Phase A:} \quad |Van - Van'| \le 4/3P \cdot W \qquad (4)$$

$$\text{Phase C:} \quad |Vcn - Vcn'| \le 4/3P \cdot W \qquad (5)$$

$$\text{Phase B:} \quad |Vbn - Vbn'| \le 4/3P \cdot W \qquad (6)$$

That is, the influence of the noise equally appears in the phases respectively.

On the other hand, a motor torque Tm is expressed by the following Eq. (7).

$$Tm = Ia \cdot Ear + Ib \cdot Ebr + Ic \cdot Ecr \qquad (7)$$

Here, Ear, Ebr and Ecr designate counter electromotive voltages of the respective phases.

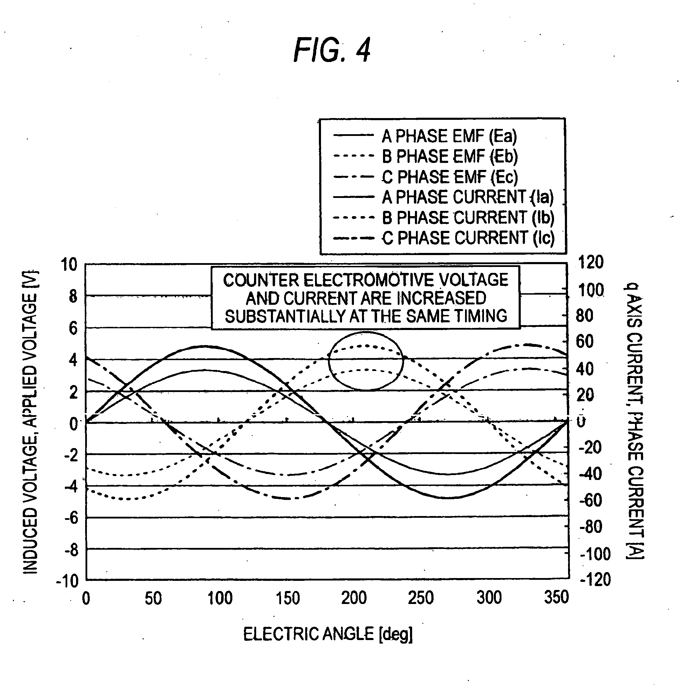

Since the motor currents and the counter electromotive voltages of the respective phases have the relations of the above-described Eqs. (1) to (3) , as shown in Fig. 4, when the counter electromotive voltage is increased in the same phase, the motor current is also increased. Further, as apparent from the above-described Eq. (7) of the motor torque, the motor torque Tm is the total sum of the products of the motor currents and the counter electromotive voltages. When the voltage command values Va to Vc vary, the motor currents la to Ic vary to generate the torque ripple. However, in this embodiment, as shown in the above-described Eqs.(4) to (6), since the influence of the noise equally appears in the voltage command values Van to Vcn of the respective phases, the torque ripple can be suppressed. At the same time, the generation of the flapping sound arising in the case where the corrected value calculating part 24 and the subtracters 25a and 25b are not provided, as described below, can be assuredly prevented.

Incidentally, when the corrected value calculating part 24 and the subtracters 25a and 25b are not provided, the voltage command values Van to Vcn of the respective phases are expressed as described below.

$$\text{Phase A:} \quad Van = P \cdot Ina = P(Ina' + Wa)$$

$$\text{Phase C:} \quad Vcn = P \cdot Inc = P(Inc' + Wc)$$

$$\text{Phase B:} \quad Vbn = -Van - Vcn = -P(Ina' + Wa) - P(Inc' + Wc)$$

The absolute values of the errors from the ideal voltage command values of the respective phases are expressed as described below.

$$\text{Phase A:} \quad |Van - Van'| = |P(Ina' + Wa) - P \cdot Ina'| = P|Wa|$$

$$\text{Phase C:} \quad |Vcn - Vcn'| = |P(Inc' + Wc) - P \cdot Inc'| = P|Wc|$$

$$\text{Phase B:} \quad |Vbn - Vbn'| = |-P(Ina' + Wa) - P(Inc' + Wc) + P(Ina' + Inc')| = |-Pwa - Pwc| \le P|Wa| + P|Wc|$$

For the purpose of simplicity, with $|Wa| = |Wb| = |Wc| = W$, the above-described absolute values of the errors are expressed as described below.

$$\text{Phase A:} \quad |Van - Van'| = P \cdot W$$

$$\text{Phase C:} \quad |Vcn - Vcn'| = P \cdot W$$

$$\text{Phase B:} \quad |Vbn - Vbn'| = 2P \cdot W$$

That is, the influence of the noise appearing in the voltage command value of the phase B is larger than those of the voltage command value of the phase A and the voltage command value of the phase C.

Therefore, the variation and turbulence of the motor current Ib of the phase B are increased and the absolute value of the counter electromotive voltage estimated value Eb of the phase B is increased at the timing that the absolute value of the motor current Ib of the phase B is increased from the motor torque arithmetic expression of the above-described Eq.(7). Thus, the torque ripple due to noise is increased and the noise is increased. Under this state, especially when the steering wheel is slowly steered, an abnormal sound like a flapping sound arises to give a discomfort to a crew.

However, in this embodiment, as described above, since the influence of the noise equally appears in the voltage command values Van, Vbn and Vcn of the phase A, the phase B and the phase C, the torque ripple can be reduced and the generation of the flapping sound can be assuredly prevented and the discomfort can be assuredly prevented from being given to the crew.

Further, in the above-described embodiment, since the voltage command value Vbn of the phase B as the remaining one-phase is calculated from the voltage command values Van and Vcn of the (n-1) phases, a stable motor control can be realized out in which the solutions of stable control systems having no control deviations remaining in the control systems of the respective phases by meeting respectively the changes of the parameters of the individual phases.

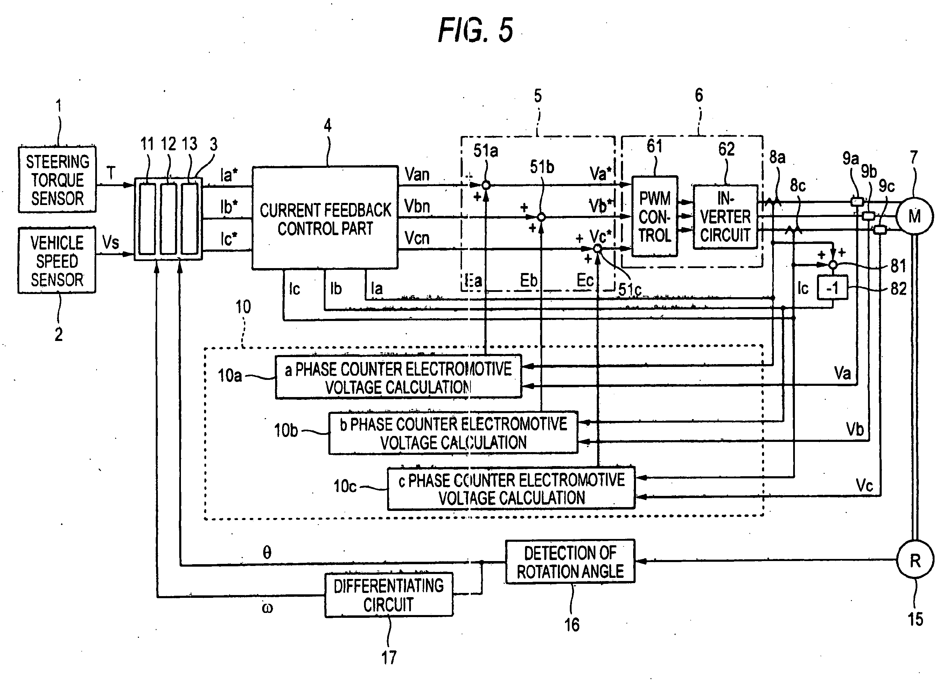

In the description of the above-described embodiment, while the three phase motor driving currents Ia to Ic of the three phase brushless motor 7 are detected in the motor current detecting parts 8a to 8c, the present invention is not limited thereto. As shown in Fig. 5, for instance, the motor detecting part 8b of the phase B may be saved. Instead thereof, motor driving currents Ia and Ic of a phase A and a phase C detected in motor current detecting parts 8a and 8c may be added by an adder 81, and then a symbol is inverted by a symbol inverter 82 to calculate a motor driving current Ib of a phase B. Then, the calculated motor driving current Ib of the phase B may be supplied to a deviation calculating part 22b of a current feedback control part 4 and a counter electromotive voltage calculating part 10b of the phase B of an each phase counter electromotive voltage calculating part 10.

Further, in the description of the above-described embodiment, while the invention has been applied to the motor controller of the three phase brushless motor 7, the present invention is not limited thereto and may be applied to a multi-phase brushless motor having four phases or more. Also in this case, in a current feedback control part 4, the outputs of current deviation adjusting parts 23a to 23n having the number corresponding to the number of phases n of the multi-phase brushless motor may be added by an adder ADD1 of a corrected value calculating part 24, and then, the sum of the outputs may be divided by the number of the phases n in an average value calculating part MO to calculate an average value. The average value as a corrected value C may be subtracted from adjusted current deviations $\Delta$II' to $\Delta$I (n-1)' of (n-1) phases. The subtracted values may be current controlled in current control parts 26(1) to 26 (n-1) to calculate voltage command values V1 to V(n-1) and remaining one-phase may be calculated in a voltage command calculating part 27.

Further, in the above-described embodiment, the invention has been described in connection with the case where the counter electromotive voltage estimated values Ea to Ec of the respective phases are calculated based on the motor driving currents Ia to Ic of the respective phases and the terminal voltages Va to Vc of the respective phases. However, the present invention is not limited thereto and the counter electromotive voltage estimated values Ea to Ec of the phase A to the phase Cmaybe calculated by using a rotation angle $\theta$ of a motor and a motor angular velocity $\omega$. Further, for instance, two counter electromotive voltage estimated values Ea and Ec may be previously obtained, and then, a remaining counter electromotive voltage estimated value Eb may be calculated by assuming that Eb = Ea-Ec.

Furthermore, in the above-described embodiment, while the invention has been described in connection with the case where the motor current detecting parts 8a to 8c are provided between the inverter circuit 62 and the brushless motor 7, the present invention is not limited thereto and a motor current detecting part may be provided in an inverter circuit.

Further, in the above-described embodiment, while the invention has been described in connection with the case where the current control parts 26a and 26c of the phase A and the phase C are provided, the present invention is not limited thereto and it will be obvious that current control parts of a phase A and a phase B may be provided or current control parts of a phase B and a phase C may be provided.

Further, in the description of the above-described embodiment, while the present invention has been applied to the electric power steering device, the present invention is not limited thereto, and the present invention may be applied to an arbitrary controller using an electric motor such as an electric tilting device, an electric telescoping device, an electric brake device or the like.

**Claims**

1.   A motor controller that drives and controls a brushless motor (7) having n phases, n being an integer of 3 or more, in a motor driving circuit, the motor controller comprising:

a motor current detecting unit (8a, 8b, 8c) that detects phase currents (Ia, Ib, Ic) of the brushless motor (7) respectively;
a current command value calculating unit (3) that respectively outputs current command values (Ia*, Ib*, Ic*) of the n phases of the brushless motor (7);
n current deviation calculating units (22a, 22b, 22c) that calculate current deviations ($\Delta$Ia, $\Delta$Ib, $\Delta$Ic) between the phase currents (Ia, Ib, Ic) respectively detected in the current detecting unit (8a, 8b, 8c) and the phase current command values (Ia*, Ib*, Ic*) respectively outputted from the current command value calculating unit (3);
a corrected value calculating unit (24) a current control unit (26a, 26c); and
a voltage command value calculating unit (27);
**characterized in**
**that** said corrected value calculating unit (24) is adapted to calculate an average value of the current deviations ($\Delta$Ia, $\Delta$Ib, $\Delta$Ic) of the n phases outputted from the current deviation calculating units (22a, 22b, 22c) as a corrected value (C),
**that** said current control unit (26a, 26c) is adapted to substract the corrected value (C), calculated in the corrected value calculating unit (24) from the current deviation ($\Delta$Ia, $\Delta$Ic) outputted from the n-1 current deviation calculating units (22a, 22c) of the n current deviation calculating units (22a, 22b, 22c) and then controlling the currents to output voltage command values (Van, Vcn) of the n-1 phases, and
**that** said voltage command value calculating unit (27) is adapted to calculate a voltage command value (Vbn) of remaining one-phase from the voltage command values (Van, Vcn) of the n-1 phases outputted from the current control unit (22a, 22c),

wherein the voltage command values (Van, Vbn, Vcn) of the n phases calculated in the voltage command value calculating unit (27) and the current control unit (26a, 26c), respectively, are supplied to a motor driving unit (6).

2.  The motor controller according to claim 1, **characterized in that** the current deviation calculating units have current deviation adjusting units that carry out an adjusting process with a quantization error to input the outputs of the current deviation adjusting units to the corrected value calculating unit.

3.  The motor controller according to claim 2, **characterized in that** the adjusting process with the quantization error includes at least one of a smoothing process, a phase compensating process and a gain adjusting process of the n current deviations.

4.  The motor controller according to claim 3, **characterized in that** the current deviation adjusting units carry out at least one of the smoothing process for suppressing an oscillation of the current deviation, the phase compensating process and the gain adjusting process.

5.  The motor controller according to claim 1, **characterized in that** the current deviation calculating units have command value adjusting units that carry out at least one of a smoothing process, a phase compensating process and a gain adjusting process with respect to the current command values of the n phases outputted from the current command value calculating unit to calculate deviations between outputs of the command value adjusting units and the current detected values of the n phases detected in the current detecting unit.

6.  The motor controller according to claim 1, **characterized in that** it further comprises:

    a counter electromotive voltage calculating unit that calculates the counter electromotive voltage of each phase of the brushless motor; and
    a counter electromotive voltage adding unit that individually adds n phase voltages outputted from the current control unit and the voltage command value calculating unit to n phase counter electromotive voltages of the counter electromotive voltage calculating unit to output results to the motor driving circuit.

**Patentansprüche**

1.  Motorsteuerung, die einen bürstenlosen Motor (7) mit n Phasen in einem Motorantriebskreis antreibt und steuert, wobei n eine ganze Zahl von ≥ 3 ist und wobei die Motorsteuerung umfasst:

    eine Motorstromstärke-Messeinheit (8a, 8b, 8c), die den jeweiligen Phasenstrom (Ia, Ib, Ic) des bürstenlosen Motors (7) misst;
    eine Stromstärke-Sollwert-Berechnungseinheit (3), die jeweilige Stromstärkesollwerte (Ia*, Ib*, Ic*) der n Phasen des bürstenlosen Motors (7) ausgibt;
    n Stromstärke-Abweichungsberechnungseinheiten (22a, 22b, 22c), die Stromstärkeabweichungen (ΔIa, ΔIb, ΔIc) zwischen den von der Stromstärke-Messeinheit (8a, 8b, 8c) gemessenen jeweiligen Phasenströmen (Ia, Ib, Ic) und den von der Stromstärke-Sollwertberechnungseinheit (3) ausgegebenen jeweiligen Phasenstrom-Sollwerten (Ia*, Ib*, Ic*) berechnen;
    eine Wertberichtigungs-Berechnungseinheit (24); eine Stromstärke-Steuereinheit (26a, 26c); und
    eine Spannung-Sollwertberechnungseinheit (27);
    **dadurch gekennzeichnet,**
    **dass** die Wertberichtigungs-Berechnungseinheit (24) ausgestaltet ist, einen Durchschnittswert der von den Stromstärke-Abweichungsberechnungseinheiten (22a, 22b, 22c) ausgegebenen Stromstärkeabweichungen (ΔIa, ΔIb, ΔIc) der n Phasen als einen berichtigten Wert (C) zu berechnen,
    **dass** die Stromstärke-Steuereinheit (26a, 26c) ausgestaltet ist, den berichtigten Wert (C), der von der Wertberichtigungs-Berechnungseinheit (24) berechnet wurde, von den von den n-1 Stromstärke-Abweichungsberechnungseinheiten (22a, 22c) der Stromstärke-Abweichungsberechnungseinheiten (22a, 22b, 22c) ausgegebenen Stromstärkeabweichungen (ΔIa, ΔIc) zu subtrahieren und dann die Stromstärken zu steuern, um Spannungs-Sollwerte (Van, Vcn) der n-1 Phasen auszugeben, und
    **dass** die Spannung-Sollwertberechnungseinheit (27) ausgestaltet ist, einen Spannungs-Sollwert (Vbn) der verbliebenen einen Phase der Spannungs-Sollwerte (Van, Vcn) der n-1 Phasen zu berechnen, die von den Stromstärke-Steuereinheiten (26a, 26c) ausgegeben wurden,
    wobei Spannungs-Sollwerte (Van, Vbn, Vcn) der n Phasen, die entsprechend von der Spannung-Sollwertberechnungseinheit (27) und den Stromstärke-Steuereinheiten (26a, 26c) berechnet wurden, einer Motorantriebseinheit (6) bereitgestellt werden.

2. Motorsteuerung nach Anspruch 1, **dadurch gekennzeichnet, dass** die Stromstärke-Abweichungsberechnungseinheiten Stromstärke-Einstelleinheiten aufweisen, die einen Einstellvorgang mit einem Quantisierungsfehler durchführen, um die Ausgaben der Stromstärke-Einstelleinheiten der Wertberichtigungs-Berechnungseinheit zuzuleiten.

3. Motorsteuerung nach Anspruch 2, **dadurch gekennzeichnet, dass** der Einstellvorgang mit dem Quantisierungsfehler wenigstens einen Glättungsvorgang, einen Phasenkompensierungsvorgang und/oder einen Kalibriereinstellvorgang der n Stromstärkenabweichungen beinhaltet.

4. Motorsteuerung nach Anspruch 3, **dadurch gekennzeichnet, dass** die Stromstärke-Abweichungsberechnungseinheiten wenigstens den Glättungsvorgang zum Unterdrücken einer Oszillation der Stromstärkeabweichungen, den Phasenkompensierungsvorgang und/oder den Kalibriereinstellvorgang durchführen.

5. Motorsteuerung nach Anspruch 1, **dadurch gekennzeichnet, dass** die Stromstärke-Abweichungsberechnungseinheiten Sollwert-Einstelleinheiten aufweisen, die wenigstens einen Glättungsvorgang, einen Phasenkompensierungsvorgang und/oder einen Kalibriereinstellvorgang mit Bezug auf die Stromstärke-Sollwerte der n Phasen durchführt, die von den Stromstärke-Abweichungsberechnungseinheiten ausgegeben wurden, um Abweichungen zwischen den Ausgaben der Sollwert-Einstelleinheiten und den gemessenen Stromstärkewerten der n Phasen, gemessen in der Stromstärke-Messeinheit, zu berechnen.

6. Motorsteuerung nach Anspruch 1, **dadurch gekennzeichnet, dass** die Motorsteuerung des Weiteren umfasst:

eine gegenelektromotorische Spannungsberechnungseinheit, die die gegenelektromotorische Spannung jeder Phase des bürstenlosen Motors berechnet; und
eine gegenelektromotorische Spannungsaddiereinheit, die n Phasenspannungen, die von der Stromstärke-Steuereinheit und der Spannung-Sollwertberechnungseinheit ausgegeben wurden, zu n gegenelektromotorischen Phasenspannungen der gegenelektromotorischen Spannungsberechnungseinheit einzeln addiert, um die Ergebnisse an die Motorantriebseinheit auszugeben.

**Revendications**

1. Contrôleur de moteur qui commande et contrôle un moteur sans balai (7) ayant n phases, n étant un entier égal à 3 ou plus, dans un circuit de commande de moteur, le contrôleur de moteur comprenant :

une unité de détection de courant de moteur (8a, 8b, 8c) qui détecte les courants de phase (Ia, Ib, Ic) du moteur sans balai (7), respectivement ;
une unité de calcul de valeur de commande de courant (3) qui délivre respectivement les valeurs de commande de courant (Ia*, Ib*, Ic*) des n phases du moteur sans balai (7) ;
n unités de calcul d'écart de courant (22a, 22b, 22c) qui calculent les écarts de courant (ΔIa, ΔIb, ΔIc) entre les courants de phase (Ia, Ib, Ic) respectivement détectés dans l'unité de détection de courant (8a, 8b, 8c) et les valeurs de commande de courant de phase (Ia*, Ib*, Ic*) respectivement délivrées par l'unité de calcul de valeur de commande de courant (3) ;
une unité de calcul de valeur corrigée (24), une unité de contrôle de courant (26a, 26c) ; et
une unité de calcul de valeur de commande de tension (27) ;
**caractérisé en ce que**
ladite unité de calcul de valeur corrigée (24) est adaptée pour calculer une valeur moyenne des écarts de courant (ΔIa, ΔIb, ΔIc) des n phases délivrées par les unités de calcul d'écart de courant (22a, 22b, 22c) en tant que valeur corrigée (C),
ladite unité de contrôle de courant (26a, 26c) est adaptée pour soustraire la valeur corrigée (C), calculée dans l'unité de calcul de valeur corrigée (24) de l'écart de courant (ΔIa, ΔIc) délivré par les n-1 unités de calcul d'écart de courant (22a, 22c) des n unités de calcul d'écart de courant (22a, 22b, 22c) et ensuite contrôler les courants pour délivrer les valeurs de commande de tension (Van, Vcn) des n-1 phases, et
ladite unité de calcul de valeur de commande de tension (27) est adaptée pour calculer une valeur de commande de tension (Vbn) d'une phase restante à partir des valeurs de commande de tension (Van, Vcn) des n-1 phases délivrées par l'unité de contrôle de courant (22a, 22c),

dans lequel les valeurs de commande de tension (Van, Vbn, Vcn) des n phases calculées dans l'unité de calcul de valeur de commande de tension (27) et l'unité de contrôle de courant (26a, 26c), respectivement, sont délivrées à une unité de commande de moteur (6).

2. Contrôleur de moteur selon la revendication 1, **caractérisé en ce que** les unités de calcul d'écart de courant comportent des unités d'ajustement d'écart de courant qui effectuent un processus d'ajustement avec une erreur de quantification pour appliquer les sorties des unités d'ajustement d'écart de courant à l'unité de calcul de valeur corrigée.

3. Contrôleur de moteur selon la revendication 2, **caractérisé en ce que** le processus d'ajustement avec l'erreur de quantification comprend au moins l'un d'un processus de lissage, d'un processus de compensation de phase et d'un processus d'ajustement de gains des n écarts de courant.

4. Contrôleur de moteur selon la revendication 3, **caractérisé en ce que** les unités d'ajustement d'écart de courant effectuent au moins l'un du processus de lissage pour supprimer une oscillation de l'écart de courant, du processus de compensation de phase et du processus d'ajustement de gain.

5. Contrôleur de moteur selon la revendication 1, **caractérisé en ce que** les unités de calcul d'écart de courant comportent des unités d'ajustement de valeur de commande qui effectuent au moins l'un d'un processus de lissage, d'un processus de compensation de phase et d'un processus d'ajustement de gain en relation avec les valeurs de commande de courant des n phases délivrées par l'unité de calcul de valeur de commande de courant pour calculer les écarts entre les sorties des unités d'ajustement de valeur de commande et les valeurs détectées de courant des n phases détectées dans l'unité de détection de courant.

6. Contrôleur de moteur selon la revendication 1, **caractérisé en ce qu'**il comprend en outre :

une unité de calcul de tension contre-électromotrice qui calcule la tension contre-électromotrice de chaque phase du moteur sans balai ; et
une unité d'addition de tensions contre-électromotrices qui ajoute individuellement les tensions des n phases délivrées par l'unité de contrôle de courant et l'unité de calcul de valeur de commande de tension aux tensions contre-électromotrices des n phases de l'unité de calcul de tension contre-électromotrice pour délivrer les résultats au circuit de commande de moteur.

FIG. 1

## FIG. 2

*FIG. 3*

# FIG. 4

Legend:
- —— A PHASE EMF (Ea)
- ----- B PHASE EMF (Eb)
- —·— C PHASE EMF (Ec)
- —— A PHASE CURRENT (Ia)
- ----- B PHASE CURRENT (Ib)
- —·— C PHASE CURRENT (Ic)

COUNTER ELECTROMOTIVE VOLTAGE AND CURRENT ARE INCREASED SUBSTANTIALLY AT THE SAME TIMING

INDUCED VOLTAGE, APPLIED VOLTAGE [V]

q AXIS CURRENT, PHASE CURRENT [A]

ELECTRIC ANGLE [deg]

FIG. 5

**EP 1 863 163 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005059786 A

- JP 2002029432 A